# EUROPÄISCHE PATENTSCHRIFT

(11) **EP 0 911 358 B1**
(45) Veröffentlichungstag und Bekanntmachung des Hinweises auf die Patenterteilung: **21.04.2010**
(21) Anmeldenummer: 98119174.5
(22) Anmeldetag: 10.10.1998
(51) Int. Cl.: C08J 9/00, C08L 27/06, C08L 33/12

(54) **Schäumbare Polyvinylhalogenidharzmassen, Verwendung von Polymerisaten darin als Verarbeitungshilfsmittel, daraus hergestellte Formteile**
Foamable polyvinylhalide resin compositions, use of polymers therein as processing aids and mouldings obtained therefrom
Compositions moussantes de résine de polyhalogénure de vinyle, utilisation des polymères y contenus comme auxiliaires de transformation et produits de moulage obtenus

(30) Priorität: 20.10.1997 DE 19746006
(43) Veröffentlichungstag der Anmeldung: 28.04.1999
(73) Patentinhaber: Evonik Röhm GmbH, 64293 Darmstadt (DE); Bärlocher GmbH, 80992 München (DE)
(72) Erfinder: Belik, Pavel Dr., 63517 Rodenbach (DE); Schneider, Georg, 63579 Freigericht (DE); Dorn, Klaus Dr., 63457 Hanau (DE); Forster, Stefan Dr., 49835 Löhne (DE); Frischkemuth, Bernd, 81247 München (DE)

(56) Entgegenhaltungen:
- EP-A- 0 214 634
- FR-A- 2 162 583
- GB-A- 2 139 629
- PATENT ABSTRACTS OF JAPAN vol. 096, no. 007, 31. Juli 1996 & JP 08 073641 A (SHIN ETSU CHEM CO LTD), 19. März 1996 & US 5 712 319 A (SUZUKI MAKOTO ET AL) 27. Januar 1998

## Beschreibung

Die Erfindung betrifft schäumbare, insbesondere frei schäumbare, Polyvinylhalogenidharzmassen, die ein auf Methylmethacrylat (MMA) basierendes Polymerisat als Verarbeitungshilfsmittel beinhalten.

Weiterhin betrifft die Erfindung die Verwendung von Polymerisaten als Verarbeitungshilfsmittel in schäumbaren, insbesondere frei schäumbaren, Polyvinylhalogenidharzmassen. Darüber hinaus richtet sich die Erfindung auf Formteile aus frei schäumbaren Polyvinylhalogenidharzmassen.

In der DE 22 60 284 werden einstufige Schaumstabilisatoren vorgestellt, welche zur Herstellung eines harten, geschäumten Vinylchloridpolymers verwandt werden. Diese Schaumstabilisatoren zeichnen sich dadurch aus, daß sie aus einem Alkylacrylathomopolymer oder einem Alkylacrylat-Mischpolymer mit bis zu 40 Gew.-% ein oder mehrerer Comonomere in einer Menge von 0,2 bis 5 Gew.-%, bezogen auf das Vinylchloridpolymer, in der Zusammensetzung enthalten sind.

Die GB 2 139 629 A betrifft geschäumte PVC-Massen, wobei zur Schaumstabilisierung Acrylat-Polymerisate zugesetzt werden. Als Acrylat-Polymerisate werden offenbart
a) MMA-Polymere
b) Copolymere auf MMA-Basis, nämlich aus
   b1) MMA und Acrylsäureestern, wie z. B. Methylacrylat, Ethylacrylat, n-Butylacrylat usw.
      oder aus
   b2) MMA, Acrylsäureestern und weiteren damit copolymerisierbaren Monomeren, wie z. B. EMA, n-BMA, 2-EHMA usw.

Für das Acrylat-Polymerisat sind Werte von wenigstens 3,0 dl/g für die reduzierte Viskosität 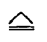 VZ > 300 cm³/g bevorzugt. Gemäß Beispielen 1-10 wird jedoch ein Polymerisat aus MMA und n-BA mit VZ von 1150 cm³/g eingesetzt.

In der EP 0 495 231 werden Verarbeitungshilfsmittel für schäumbare PVC-Harzmassen offenbart, durch welche die Schaumdichte in den Formteilen verringert wird. Dies wird mittels zweistufiger Emulsionspolymerisate - sogenannter Core-Shell-Polymerisate - erreicht. Dabei liegen die Viskositätszahlen der eingesetzten Emulsionspolymerisate im Bereich von 175. Die Schaumdichte, die mit einem solchen Emulsionspolymerisat bezüglich Polyvinylharzmassen erreicht wird, ist mit 0,46 g/cm³ beschrieben.

In der Praxis jedoch wurden bislang Schaumdichten von < 0,6 g/cm³ bei Schaumplatten, die beispielsweise durch Extrusion hergestellt wurden, nicht realisiert.

Schäumbare Polyvinylhalogenidharzmassen mit geringer Schaumdichte sind ökonomisch gesehen besonders interessant. Aus diesen Schäumen können Gegenstände hergestellt werden, welche trotz großer Abmessungen ein dennoch geringes Gewicht aufweisen.

Die im Stand der Technik - wie z. B. in Kunststoff-Additive von Gächter/Müller (Carl Hanser Verlag) beschrieben - verwendeten Emulsionspolymerisate als Verarbeitungshilfsmittel in schäumbaren Polyvinylharzmassen zeichnen sich allesamt durch Viskositätszahlen von 330 bis 600 cm³/g aus. Durch den Einsatz dieser Emulsionspolymerisate kann zwar die Schaumdichte von Polyvinylharzmassen erniedrigt werden, doch ergibt sich ein Schaum, der sehr grobporös ausfällt und deshalb eine sehr unebene, ungleichmäßige und rauhe Oberflächengestalt aufweist.

EP 214 634 beschreibt ein Verfahren zur Herstellung von Kunststoffformkörpern aus Schaumstoff, indem man ein Vinylchloridharz mit einem Acrylharz versetzt, die Mischung pelletiert und dann ein leicht flüchtiges organisches Blähmittel, wie beispielsweise einen leicht flüchtigen Kohlenwasserstoff zufügt und anschließend in einem zweistufigen Schäumprozess die Kunststoffformkörper zuerst vorschäumt und dann in einer geschlossenen Form zu Ende schäumt.

Alkylmethacrylate als Schäumhilfsmittel werden nicht beschrieben.

Aufgabe der vorliegenden Erfindung war es deshalb, schäumbare, insbesondere frei schäumbare, Polyvinylhalogenidharzmassen für Schäume mit verbesserter Oberflächenqualität bei geringer Schaumdichte anzugeben.

Eine weitere Aufgabe bestand darin, Verarbeitungshilfsmittel auf Basis von Emulsionspolymerisaten zu finden, die einerseits die Schaumdichte des Polyvinylharzes erniedrigen bzw. bei geringerer Einsatzmenge die Schaumdichte niedrig halten, auf der anderen Seite aber dafür sorgen, daß die Oberflächenbeschaffenheit nicht nachteilig beeinflußt wird.

Noch eine Aufgabe ist in der Bereitstellung von geformten Teilen aus ins Freie geschäumten, bevorzugt durch Extrusion geschäumten, Polyvinylhalogenidharzmassen zu sehen.

Diese Aufgaben werden durch eine Polyvinylhalogenidharzmasse mit den Merkmalen des Anspruchs 1 gelöst. In den direkt oder indirekt abhängigen Unteransprüchen bzw. nebengeordneten Ansprüchen werden besondere Ausführungsformen der Erfindung unter Schutz gestellt.

Dadurch, daß man schäumbare, insbesondere frei schäumbare, Polyvinylhalogenidharzmassen, enthaltend
A) 1 bis 25 Gew.-Teile, bezogen auf 100 Teile des Polyvinylhalogenids, eines Polymerisats erhältlich durch Emulsionspolymerisation von
   (i) 20 bis 75 Gew.-Teile Methylmethacrylat,
   (ii) 25 bis 80 Gew.-Teile eines oder mehrerer C₂-C₁₈-Alkylmethacrylate, und
   (iii) 0 bis 5 Gew.-Teile eines oder mehrerer ein- oder mehrfach vinylisch ungesättigter mit (i) und/oder (ii) copolymerisierbarer Monomeren,
      wobei die Komponenten (i)-(iii) zusammen 100 Gew.-Teile ergeben die mit bis zu 100 Gew.-Teile für die Emulsionspolymerisation üblicher Zusätze polymerisiert werden, wobei das Emulsionspolymerisat einstufig ist und eine VZ > 700 cm³/g aufweist, und wobei Copolymere ausgenommen sind, die
   iv) überwiegend MMA und
   v) einen oder mehrere Acrylsäureester und
   vi) Ethylmethacrylat, n-Butylmethacrylat oder 2-Ethylhexylmethylacrylat
   enthalten,
B) 0,1 bis 10 Gew.-Teile, bezogen auf 100 Teile des Polyvinylhalogenids, eines oder mehrerer Treibmittel und
C) 0 bis 100 Gew.-Teile, bezogen auf 100 Teile des Polyvinylhalogenids, üblicher Zusätze,
bereitstellt, erhält man erfindungsgemäß Polyvinylhalogenidharzmassen, die nach dem Aufschäumen Harzmassen bilden, welche bei guter Oberflächenbeschaffenheit dennoch eine Schaumdichte von weniger als 0,7 g/cm³, bevorzugt < 0,6 g/cm³, aufweisen. Derart geschäumte Polyvinylhalogenidharzmassen eignen sich ganz besonders für einen Einsatz bei Kunststoffteilen, die eine sehr glatte Oberfläche bei einer möglichst geringen Schaumdichte aufweisen sollen.

Gegenstand der Anmeldung sind besonders bevorzugt frei schäumbare Polyvinylhalogenidharzmassen. Unter dem Begriff "frei schäumbar" versteht man einen kontinuierlichen Schäumungsprozeß, bei dem die aus einer Richtung kommende Polymerharzmasse in die restlichen fünf Raumrichtungen frei schäumen kann, ohne daß der Schaum gegen einen Druck arbeiten muß, der größer als der momentan herrschende Luftdruck ist.

Die erfindungsgemäßen Formmassen zeigen allerdings auch hervorragende Eigenschaften, wenn nicht "frei" sondern zwangsgeschäumt wird, worunter das Schäumen gegen feste äußere Wände zu verstehen ist.

Polyvinylhalogenidharzmassen im erfindungsgemäßen Sinne beinhalten wenigstens ein Polyvinylhalogenid. Hierzu zählen u. a. Polyvinylfluoride und -chloride.

Beim Polyvinylhalogenid in der erfindungsgemäßen Polyvinylhalogenidharzmasse kann es sich insbesondere um Homopolymere des Vinylchlorids, um Copolymere des Vinylchlorids mit mindestens 80 Gew.-% Vinylchlorid handeln.

Geeignete ethylenisch ungesättigte Comonomere sind z.B. Vinylacetat, Vinyläther, Vinylidenchlorid, Alkylacrylate, Olefine, wie z. B. Ethylen und Propylen.

Bevorzugt handelt es sich beim Polyvinylhalogenid in der erfindungsgemäßen Formmasse um Polyvinylchlorid.

Mit dem Begriff "Polyvinylhalogenid" sind insbesondere auch Vinylchloridpolymere umfaßt.

Mit dem Ausdruck "Vinylchloridpolymer" ist entweder ein Vinylchloridhomopolymer oder ein Mischpolymer von Vinylchlorid mit einer kleineren Menge (vorzugsweise bis zu 20 Gew.-%) ein oder mehrerer äthylenisch ungesättigter Comonomere gemeint. Geeignete Comonomere sind Vinylacetat, Vinyläther, Vinylidenchlorid, Alkylacrylate und Olefine, wie z. B. Äthylen oder Propylen. Die gemäß der Erfindung verwendeten Vinylchloridpolymere besitzen vorzugsweise einen Fikentscher-K-Wert zwischen 45 und 75 und insbesondere zwischen 50 und 65. Sie können unter Verwendung einer allgemein bekannten Polymerisationstechnik hergestellt werden, wie z. B. Suspensions-, Emulsions-, Massen-, Lösungs- und Gasphasenpolymerisation.

### Die Komponente A) der Polyvinylhalogenidharzmasse

Die Komponente A) der Polyvinylhalogenidharzmasse ist ein essentieller Bestandteil. Es handelt sich um ein Emulsionspolymerisat, das in einer Menge von 1 bis 25 Gew.-Teilen relativ zu 100 Teilen Polyvinylhalogenid in der gesamten Masse enthalten ist.

Bei weniger als 1 Teil leidet sowohl die Schaumdichte als auch die Oberfläche der aus den Formmassen erhältlichen Formteile an unzureichenden Eigenschaften, während bei Mengen von mehr als 25 Teilen keine im Verhältnis zum Aufwand stehende Verbesserung der Schaumdichten und Oberflächenbeschaffenheiten erzielbar ist.

Bevorzugt sind 5 bis 25 Teile A) in der Polyvinylhalogenidharzmasse enthalten. Besonders bevorzugt werden 5 bis 20 Teile A) eingesetzt. Ganz besonders günstig wirken sich 7 bis 18 Teile des Verarbeitungshilfsmittels A) auf Polyvinylhalogenidschäume aus.

Erfindungsgemäß werden die Emulsionspolymerisate als Verarbeitungshilfsmittel in frei schäumbaren Polyvinylhalogenidharzmassen eingesetzt. Es handelt sich im Regelfall um einstufige Emulsionspolymerisate.

Unter einstufigen Emulsionspolymerisaten versteht man solche Emulsionspolymerisate, welche nicht aus zwei verschiedenen Phasen aufgebaut sind, wie es beispielsweise bei den sogenannten Core-Shell-Polymeren der Fall ist.

Erfindungsgemäß kann neben dem einstufigen Emulsionspolymerisat in untergeordneter Menge auch ein zweistufiges oder mehrstufiges Emulsionspolymerisat als Komponente A) mitverwendet werden. "Untergeordnete Menge" bedeutet, daß bis zu 20 Gew.-% der Komponente A) durch zwei- oder mehrstufige Emulsionspolymerisate gebildet werden.

Im Rahmen der Erfindung sind auch solche "zwei- oder mehrstufigen" Emulsionspolymerisate als einstufig zu bezeichnen, bei welchen Kern und Schale oder Schalen im wesentlichen die Zusammensetzung der Komponente A) aufweisen.

Das Polymerisat A) kann durch Emulsionspolymerisation bestimmter Komponenten (i)-(iii) auf an sich bekannte Weise hergestellt werden.

### Die Komponente (i) des Emulsionspolymerisats A)

Hierbei handelt es sich essentiell um Methylmethacrylat (MMA), was in 20 bis 75 Gew.-% in der zur Herstellung des Bestandteils A) verwendeten Monomermischung vorhanden ist. Liegt der Anteil unterhalb von 20 Gew.-% oder oberhalb von 75 Gew.-%, ist die gewünschte Wirkung gemäß der Erfindung nicht vorhanden.

### Die Komponente (ii) des Emulsionspolymerisats A)

Hierbei handelt es sich um C₂-C₁₈-Alkylmethacrylate. Es können ein oder mehrere davon eingesetzt werden.

Unter dem Begriff "C₂-C₁₈-Alkylmethacrylate" versteht man im Sinne der Erfindung Ester der Methacrylsäure mit Alkoholen, die eine Alkylkette von 2 bis 18 C-Atomen aufweisen können,
wobei diese Kette ggf. linear oder beliebig verzweigt vorliegen kann, so daß sich in diesen Ketten auch sekundäre und tertiäre C-Atome befinden können.

Erfindungsgemäß wird die Komponente (ii) dabei bevorzugt aus der Gruppe der C₂-C₄-Alkylmethacrylate ausgewählt. Unter dem Begriff "C₂-C₄-Alkylmethacrylate" versteht man Ester der Methacrylsäure mit Alkoholen der Kettenlänge C₂ bis C₄, wobei diese Alkohole linear oder beliebig verzweigt vorliegen können. Insbesondere kommen als Alkohole in Frage: Ethanol, n-Propanol, n-Butanol, iso-Propanol, iso-Butanol, sec-Butanol und tert.-Butanol. Besonders bevorzugt ist der Einsatz von n-Butylmethacrylat und/oder iso-Butylmethacrylat als Komponente (ii).

Dabei ist es besonders vorteilhaft, das n-Butylmethacrylat in einem Konzentrationsbereich von 25 bis 40 Gew.-%, bezogen auf die Komponenten (i)-(iii) des Emulsionspolymerisates, einzusetzen. Demgegenüber ist es vorteilhaft, das iso-Butylmethacrylat in einem Konzentrationsbereich von 60 bis 80 Gew.-%, bezogen auf die Komponenten (i)-(iii) des Emulsionspolymerisates, einzusetzen.

### Die Komponente (iii) des Emulsionspolymerisats A)

Hierbei handelt es sich um einen optionalen Bestandteil der Komponente A). In Frage kommen alle mit (i) oder (ii) oder (i) und (ii) copolymerisierbaren Monomere, die die Wirkung des Emulsionspolymerisats A) nicht nachteilig verändern. Die Menge von (iii) ist auf maximal 5 Gew.-% beschränkt. In diesem niedrigen Anteilsbereich ist im allgemeinen gewährleistet, daß keine unbrauchbaren Ergebnisse erhalten werden.

Geeignete Monomere sind u. a.
- monoethylenisch ungesättigte, carboxylgruppenfreie Monomere. Z. B. Hydroxy(meth)acrylate mit (CH₂)ₓOH als Estergruppe, wobei x = 2-4 ist. (Meth)acrylamid, (Meth)acrylonitril, Vinylsulfonsäure, Allylsulfonsäure, Dimethylaminoethyl(meth)acrylat, Diethylaminoethyl(meth)acrylat, Vinylphosphonsäure, Allylphosphonsäure, Allylalkohol, Vinylglykol, Vinylacetat, Allylacetat, N-Vinylpirrolidon, N-Vinylformamid, N-Vinylimidazol, N-Vinylimidazolin, 1-Vinyl, -2-methyl-2-imidazolin. Mit Alkohol- bzw. mit Aminogruppen funktionalisierte Ester der (Meth)acrylsäure mit 1-8 C-Atomen im Alkoholrest, wie z. B. Methyl (meth) acrylat, Ethyl (meth) acrylat, Propyl(meth)acrylat, Butyl(meth)acrylat, Ethylen, Propylen, Methylvinylether, Ethylvinylether, Styrol und α-Methylstyrol. Alle monomeren Säuren und Basen können evtl. auch als Salze verwendet werden.
- Mehrfachethylenisch ungesättigte Monomere. Z. B. Ester des Allylalkohols mit (Meth)acryl-, Malein- bzw. Fumarsäure, mehrfache Ester eines Polyols mit (Meth)acryl-, Malein- bzw. Fumarsäure, Polyallyl- und Polyvinylverbindingungen wie z. B. Triallylamin, Tetraallylethylendiamin, Polyethylenglykoldivinylether, Trimethylolpropandiallylether, Butandioldiallylether, Pentaerythrittriallylether, Divinylharnstoff.

Unter die Monomere (iii) fallen auch solche Polymerbausteine, die unter den gewählten Reaktionsbedingungen gegenüber den entsprechenden Ausgangsverbindungen chemisch modifiziert wurden.

Als Monomer (iii) kommen auch zwei oder mehrere der vorgenannten Verbindungen gemeinsam in Frage.

In einer bevorzugten Variante ist die Komponente A) frei von Monomeren (iii), d. h. die Menge an (iii) ist 0 Gew.-%. Das Polymerisat A) besteht in diesem Fall aus
(i) 20 bis 75 Gew.-% MMA und
(ii) 25 bis 80 Gew.-% C₂-C₁₈-Alkylmethacrylat.

Die Komponenten (i)-(iii) werden mit bis zu 100 Gew.-% für die Emulsionspolymerisation üblichen Zusätzen polymerisiert.

Zu solchen Zusätzen gehören u. a. Emulgatoren und Initiatoren.

Als Emulgatoren können z. B. Alkalisalze von längerkettigen Fettsäuren, Alkylsulfate, Alkylsulfonate, Alkylsulfosuccinate, alkylierte Arylsulfonate oder alkylierte Biphenylethersulfonate, Salze der Abietinsäure oder deren Derivate, Sulfobernsteinsäureester sowie nichtionische Block-Copolymere verwendet werden.

Geeignete Initiatoren sind z. B. Natrium-, Kalium- und Ammoniumpersulfat, tert.-Butylhydroperoxid, wasserlösliche Azoverbindungen sowie die Salze der 4,4'-Azobis[4-cyanopentansäure] oder 2,2'-Azobis[2-amidinopropanhydrochlorid]. Für die Polymerisation bei relativ niedriger Temperatur eignen sich insbesondere Redoxsysteme aus einem Persulfat oder einem Hydroperoxid sowie einem Reduktionsmittel in Verbindung mit einem Eisen(II)-Salz. Geeignete Reduktionsmittel sind beispielsweise Natrium-metabisulfit, Natriumhydroxymethansulfinat und Ascorbinsäure.

Polyvinylharzmassen mit besonders glatter Oberfläche und einem besonders geringer Schaumdichte lassen sich mit Emulsionspolymerisaten erzeugen, welche oben angegebene Zusammensetzung enthalten und eine VZ von bevorzugt 750 bis 1200 cm³/g aufweisen. Ganz besonders bevorzugt ist der Bereich für die VZ von 800 bis 1100 cm³/g.

### Die Komponente B) der Polyvinylhalogenidharzmasse

Als Treibmittel kommen die kommerziell im Handel befindlichen Treibmittel für Polyvinylhalogenidharzmassen in Frage, die dem Fachmann allgemein bekannt sind. Die erfindungsgemäße Masse kann ein Treibmittel oder eine Kombination von Treibmitteln enthalten. Geeignete Treibmittel sind Materialien (gewöhnlich Feststoffe), die sich beim Erhitzen zersetzen und ein Gas abgeben, welches ein Schäumen bewirkt, Flüssigkeiten, die beim Erhitzen oder bei einer Druckwegnahme schäumen (wie z. B. Pentan, Hexan usw.) oder Gase. Die Temperatur, bei der die zersetzbaren Typen von Treibmitteln sich unter in Freiheitsetzung von Gasen zersetzen und die flüssigen Treibmittel unter Schäumung verdampfen, wird im allgemeinen als Aktivierungstemperatur bezeichnet. Es wird im allgemeinen bevorzugt, in den erfindungsgemäßen Massen zersetzbare Typen von Treibmitteln zu verwenden. Das zersetzbare Treibmittel wird üblicherweise in einer Menge von 0,1 bis 2 Gew.-%, bezogen auf das Vinylchloridpolymer in der schäumbaren Zusammensetzung, vorzugsweise in einer Menge von 0,25 bis 1 Gew.-%, verwendet. Beispiele für geeignete zersetzbare Treibmittel sind stickstoffabgebende Treibmittel, wie z. B. die organischen Azo-, Hydrazo- und Nitrosoverbindungen (wie z. B. Azodicarbonamid, Dinitrosopentamethylentetramin, p,p'-Oxy-bis-sulfonylhydrazid) und auch die Kohlendioxid in Freiheit setzenden Treibmittel, wie z. B. Carbonate und Bicarbonate. In einigen Fällen kann es erwünscht sein, ein Nukleierungsmittel in das schäumbare Material einzuverleiben, um Stellen für die Blasenbildung zu schaffen. In gewissen Fällen kann es unnötig sein, ein Treibmittel in die schäumbare Zusammensetzung einzuverleiben, da einige Zusammensetzungen selbstschäumend sind. So sind beispielsweise Vinylchlorid-/ Methylmethacrylat-Mischpolymere selbstschäumend, da sie beim Erhitzen Methylchlorid abgeben.

### Die Komponente C) der Polyvinylhalogenidharzmasse

Unter üblichen Zusätzen versteht man z. B. Modifizierungsmittel zur Verbesserung der Schlagzähigkeit, Wärmeformbeständigkeit und Witterungsbeständigkeit, sowie Stabilisatoren, Gleitmittel, Füllstoffe, Farbstoffe und Pigmente. Im allgemeinen liegt die Gesamtmenge der weiteren Zusatzstoffe bei 0 bis 100, vorzugsweise unter 40, insbesondere unter 30 Gew.-Teilen, bezogen auf 100 Gew.-Teile des Polyvinylhalogenids.

Gegenstand der Erfindung ist auch die Verwendung des hierin beschriebenen Emulsionspolymerisats als Verarbeitungshilfsmittel in frei schäumbaren Polyvinylhalogenidharzmassen zur Herstellung von Schäumen mit verbesserter Oberflächenqualität bei geringer Schaumdichte.

Zur Erfindung gehören auch Formteile aus frei geschäumten Polyvinylhalogenidharzmassen, wie sie hierin beschrieben sind.

Die nachfolgenden Beispiele sollen die Erfindung verdeutlichen, sie jedoch keinesfalls einschränken.

### Beispiel 1

### (Herstellung eines hochmolekularen Emulsionspolymerisats)

In ein geeignetes Reaktionsgefäß, das mit einem Rührer, Rückflußkühler und einem Stickstoffeinlaß versehen ist, werden 954 Teile entionisiertes Wasser und 0,02 Teile NaOH gegeben. Die Mischung wird mit Stickstoff gespült und auf 75°C erwärmt.

Bei Erreichen der angegebenen Temperatur wird eine Mischung aus

| | |
|---|---|
| 193 | Teilen entionisiertem Wasser |
| 4 | Teilen Na-Laurylsulfat |
| 350 | Teilen Methylmethacrylat |
| 150 | Teilen n-Butylmethacrylat |

zugegeben. Anschließend werden 0,1 Teile Natriumperoxidisulfat in 2 Teilen Wasser und 0,2 Teile Natriumhydrogensulfit in 4 Teilen Wasser in das Reaktionsgefäß gegeben.

Danach steigt die Temperatur innerhalb 30 Minuten auf einen Höchstwert an und fällt dann wieder auf die Ausgangstemp. ab. Nach weiteren 30 Minuten Nachreaktionszeit wird auf Raumtemperatur abgekühlt und das Polymerisat durch Sprühtrocknung isoliert. Die VZ des resultierenden Polymers liegt bei 1040 cm³/g. Diese sowie alle weiteren VZ-Werte wurden nach DIN 51 562 Teil 1 und 3 1/83 bestimmt. DIN 51 562 Teil 1 und 3 beschreiben das Verfahren und die Auswertung der VZ-Bestimmung. Die genauen Meßbedingungen (Lösungsmittel, Meßtemperatur, Kapillartyp usw.) werden in Anlehnung an die DIN 7745 Teil 2 Anhang A verwendet, mit dem Unterschied, daß die Konzentration auf 1,25 g/l erniedrigt wurde.

### Beispiel 2

### (Einsatz des hochmolekularen Emulsionspolymerisats in einer PVC-Freischaumrezeptur)

Die Austestung des hochmolekularen Copolymerisats aus Beispiel 1 erfolgte in einer gängigen Freischaumrezeptur:

| | |
|---|---|
| 100 | Teile Suspensions PVC (K-Wert 58/60) |
| 5 | Teile Kreide |
| 4 | Teile Titandioxid |
| 1,5 | Teile Butylzinnmercaptids |
| 2,5 | Teile Gleitmittel Compound |
| 2,7 | Teile Treibmittelsystem |
| 10-12 | Teile hochmolekulares Polymers |

Die Rezepturbestandteile werden in einem handelsüblichen Heiz/Kühlmischer bis zu einer Aufbereitungstemperatur von 115 - 120 °C vermischt. Anschließend wird im Kühlmischer auf ca. 40 °C abgekühlt. Nach eintägiger Lagerung des Dryblends wird eine Schaumextrusion auf einem Doppelschneckenextruder durchgeführt.

Nach Austritt aus dem Werkzeug schäumt das PVC-Material nach dem Freischaumverfahren auf. Es werden 20 cm breite Schaumplatten hergestellt, die über ein temperiertes Walzwerk abgezogen werden. An diesen Freischaumplatten können die Dichten und die Qualität der Oberflächen beurteilt werden.

Als Beispiel eines marktgängigen Produktes (Standard) wurde MMA/n-BMA-Emulsionscopolymerisat aus 80 Teilen Methylmethacrylat und 20 Teilen n-Butylmethacrylat und einer VZ von 550 cm³/g mitgetestet. Dieses zeigt bei 12 Teilen Einsatzmenge eine Schaumdichte von 0,55 g/cm³, bei Erniedrigung der Einsatzmenge auf 11 bzw. 10 Teile resultieren dann höhere Schaumdichten. Beim Einsatz unterhalb von 10 Teilen werden nur noch rauhe und ungleichförmige Oberflächen erhalten.

Setzt man dagegen das im Beispiel 1 hergestellte Copolymer ein, so wird bei 12 Teilen Einsatzmenge eine Schaumdichte von 0,45 g/cm³ erreicht. Eine Reduzierung der Einsatzmenge ist hierbei bei gleichbleibender Oberflächengüte bis auf 9 Teile, ohne daß die Schaumdichte zunimmt, möglich.

Die Oberflächengüte wurde visuell bewertet und in drei Güteklassen eingeordnet:
+ glatte, glänzende, homogene Oberfläche
o rauhe, matte, homogene Oberfläche
- rauhe, matte, inhomogene Oberfläche mit Rissen und/oder Stippen

Die Oberflächengüte wurde in einigen Fällen auch durch ein Oberflächenrauheitsmeßgerät (Perthometer) der Fa. Hoffmann (München; Typ: Surftest 301) kontrolliert.

Zusätzlich wurde in Einzelfällen die gemittelte Rauhtiefe R_{Z} durch ein Oberflächenrauheitsmeßgerät (Perthometer) der Fa. Hoffmann (München; Typ: Surftest 301) kontrolliert.

Die Ermittlung der Rauheitsmeßgröße R_{Z} mit elektrischem Tastschnittgerät (Surftest 301) erfolgte gemäß DIN 4777 und 4768 T 1; 8.74.

In der nachfolgenden Tabelle 1 angegeben findet sich der Wert R_{Z}, d. h. die gemittelte Rauhtiefe. Insbesondere ist R_{Z} das arithmetische Mittel aus den Einzelrauhtiefen (Z₁, Z₂, Z₃, Z₄, Z₅) fünf aneinander grenzender Einzelmeßstrecken.

**Tabelle 1**

| VH | Standard | Standard | Beispiel 1 | Beispiel 1 | Beispiel 1 | Beispiel 1 | Beispiel 1 | Beispiel 1 |
|---|---|---|---|---|---|---|---|---|
| Einsatzmenge [phr] | 12 | 10 | 12 | 11 | 10 | 9 | 8 | 7 |
| Dichte [g/cm³] | 0,55 | 0,59 | 0,45 | 0,45 | 0,45 | 0,45 | 0,47 | 0,50 |
| Gemittelte Rauhtiefe R_{Z} [µm] | | 12 | | | 10,8 | 11,6 | 11,9 | 11,1 |
| Oberflächengüte | + | ○ | + | + | + | + | + | + |

| | | | | | | | | |
|---|---|---|---|---|---|---|---|---|
| VH = Verarbeitungshilfsmittel phr = Teile pro 100 Teile PVC der Freischaumrezeptur | | | | | | | | |

### Beispiel 3

Einsatz des erfindungsgemäßen hochmolekularen Emulsionspolymerisats auf Methacrylat-Basis (Beispiel 1) in einer PVC-Freischaumrezeptur im Vergleich zu hochmolekularen Emulsionspolymerisaten auf Methacrylat/Acrylat-Basis gemäß GB 2 139 629 A, Beispiel 1-10.

Die Austestung des hochmolekularen Copolymerisats aus Beispiel 1 erfolgte in einer gängigen Freischaumrezeptur:

| | |
|---|---|
| 100 | Teile Suspensions PVC (K-Wert 58/60) |
| 5 | Teile Kreide |
| 4 | Teile Butylzinnmercaptids |
| 2,5 | Teile Gleitmittel Compound |
| 2,7 | Teile Treibmittelsystem |
| 8 bzw. 12 | Teile hochmolekulares Polymers |

Die Rezepturbestandteile werden in einem handelsüblichen Heiz/Kühlmischer bis zu einer Aufbereitungstemperatur von 115 - 120 °C vermischt. Anschließend wird im Kühlmischer auf ca. 40 °C abgekühlt. Nach eintägiger Lagerung des Dryblends wird eine Schaumextrusion auf einem Doppelschneckenextruder durchgeführt.

Nach Austritt aus dem Werkzeug schäumt das PVC-Material nach dem Freischaumverfahren auf. Es werden 20 cm breite Schaumplatten hergestellt, die über ein temperiertes Walzwerk abgezogen werden. An diesen Freischaumplatten können die Dichten und die Qualität der Oberflächen beurteilt werden.

Als Beispiele von marktgängigen Produkten wurden MMA/n-BA-Copolymerisate mit VZ = 750 cm³/g (Standard 1) sowie VZ = 950 cm³/g (Standard 2) mitgetestet. Diese zeigen bei 12 Teilen Einsatzmenge Schaumdichten von 0,55 g/cm³ (Standard 1) sowie 0,52 cm³/g (Standard 1), bei Erniedrigung der Einsatzmenge auf 11 bzw. 10 Teile resultieren dann höhere Schaumdichten. Beim Einsatz unterhalb von 10 Teilen werden nur noch rauhe und ungleichförmige Oberflächen erhalten.

Setzt man dagegen das im Beispiel 1 hergestellte Copolymer ein, so wird bei 12 Teilen Einsatzmenge eine Schaumdichte von 0,45 g/cm³ erreicht. Eine Reduzierung der Einsatzmenge ist hierbei bei gleichbleibender Oberflächengüte bis auf 9 Teile, ohne daß die Schaumdichte zunimmt, möglich (siehe Beispiel 2).

In diesem Beispiel wurden 8 Teile des im Beispiel 1 hergestellten Copolymers eingesetzt, um annähernd gleiche Dichte zu erhalten wie mit den MMA/n-BA-Copolymeren.

Die Oberflächengüte wurde durch ein Oberflächenrauheitsmeßgerät (Perthometer) der Fa. Hoffmann (München; Typ: Surftest 301) kontrolliert.

| VH | Standard 1 | Standard 2 | Beispiel 1 |
|---|---|---|---|
| Einsatzmenge [phr] | 12 | 12 | 8 |
| Dichte [g/cm³] | 0,55 | 0,52 | 0,49 |
| Gemittelte Rauhtiefe Rz [µm] | 12,8 | 15,0 | 10,5 |

## Patentansprüche

1. Schäumbare, insbesondere frei schäumbare, Polyvinylhalogenidharzmassen für Schäume mit verbesserter Oberflächenqualität bei geringer Schaumdichte, enthaltend
A) 1 bis 25 Gew.-Teile, bezogen auf 100 Teile des Polyvinylhalogenids, eines Polymerisats erhältlich durch Emulsionspolymerisation von
(i) 20 bis 75 Gew.-Teile Methylmethacrylat,
(ii) 25 bis 80 Gew.-Teile eines oder mehrerer C₂-C₁₈-Alkylmethacrylate, und
(iii) 0 bis 5 Gew.-Teile eines oder mehrerer ein- oder mehrfach vinylisch ungesättigter mit (i) und/oder (ii) copolymerisierbarer Monomeren,
wobei die Komponenten (i)-(iii) zusammen 100 Gew.-Teile ergeben, die mit bis zu 100 Gew.-Teile für die Emulsionspolymerisation üblicher Zusätze polymerisiert werden, wobei das Emulsionspolymerisat einstufig ist und eine VZ > 700 cm³/g aufweist, und wobei Copolymere ausgenommen sind, die
iv) überwiegend MMA und
v) einen oder mehrere Acrylsäureester und
vi) Ethylmethacrylat, n-Butylmethacrylat oder 2-Ethylhexylmethylacrylat
enthalten;
B) 0,1 bis 10 Gew.-Teile, bezogen auf 100 Teile des Polyvinylhalogenids, eines oder mehrerer Treibmittel; und
C) 0 bis 100 Gew.-Teile, bezogen auf 100 Teile des Polyvinylhalogenids, üblicher Zusätze.

2. Harzmassen nach Anspruch 1,
**dadurch gekennzeichnet,**
**daß** die Komponente (ii) aus C₂-C₄-Alkylmethacrylaten besteht.

3. Harzmassen nach Anspruch 2,
**dadurch gekennzeichnet,**
**daß** die Komponente (ii) n-Butylmethacrylat und/oder iso-Butylmethacrylat ist.

4. Harzmasse nach Anspruch 1 oder 2,
**dadurch gekennzeichnet,**
**daß** die Komponente (ii) 25 bis 40 Gew.-Teile n-Butylmethacrylat ist.

5. Harzmasse nach Anspruch 1 oder 2,
**dadurch gekennzeichnet,**
**daß** die Komponente (ii) 60 bis 80 Gew.-Teile iso-Butylmethacrylat ist.

6. Harzmasse nach einem oder mehreren der vorhergehenden Ansprüche,
**dadurch gekennzeichnet,**
**daß** VZ im Bereich von 750 bis 1200 cm³/g ist.

7. Harzmasse nach Anspruch 6,
**dadurch gekennzeichnet,**
**daß** VZ im Bereich von 800 bis 1100 cm³/g ist.

8. Harzmasse nach einem oder mehreren der vorhergehenden Ansprüche,
**dadurch gekennzeichnet,**
**daß** sie frei schäumbar ist.

9. Verwendung des Emulsionspolymerisats gemäß den Ansprüchen 1 bis 8, als Verarbeitungshilfsmittel in frei schäumbaren Polyvinylhalogenidharzmassen zur Herstellung von Schäumen mit verbesserter Oberflächenqualität bei geringer Schaumdichte.

10. Verwendung nach Anspruch 9 in PVC-Harzmassen.

11. Formteile aus frei geschäumten Polyvinylhalogenidharzmassen gemäß den Ansprüchen 1 bis 8.

## Claims

1. Foamable, in particular free-foamable, polyvinyl halide resin compositions for foams having improved surface quality at low foam density, containing
A) from 1 to 25 parts by weight, based on 100 parts of the polyvinyl halide, of a polymer which can be obtained by emulsion polymerization of
(i) from 20 to 75 parts by weight of methyl methacrylate,
(ii) from 25 to 80 parts by weight of one or more C₂-C₁₈-alkyl methacrylates and
(iii) from 0 to 5 parts by weight of one or more singly or multiply vinylically unsaturated monomers which can be copolymerized with (i) and/or (ii),
where the components (i)-(iii) together add up to 100 parts by weight and are polymerized with up to 100 parts by weight of additives customary for emulsion polymerization, with the emulsion polymer being a single-stage polymer and having a VN > 700 cm³/g and with the exception of copolymers containing
(iv) predominantly MMA and
(v) one or more acrylic esters and
(vi) ethyl methacrylate, n-butyl methacrylate or 2-ethylhexyl methacrylate;
B) from 0.1 to 10 parts by weight, based on 100 parts of the polyvinyl halide of one or more blowing agents; and
C) from 0 to 100 parts by weight, based on 100 parts of the polyvinyl halide, of customary additives.

2. Resin compositions according to Claim 1, **characterized in that** the component (ii) consists of C₂-C₄-alkyl methacrylates.

3. Resin compositions according to Claim 2, **characterized in that** the component (ii) is n-butyl methacrylate and/or isobutyl methacrylate.

4. Resin composition according to Claim 1 or 2, **characterized in that** from 25 to 40 parts by weight of the component (ii) is n-butyl methacrylate.

5. Resin composition according to Claim 1 or 2, **characterized in that** from 60 to 80 parts by weight of the component (ii) is isobutyl methacrylate.

6. Resin composition according to one or more of the preceding claims, **characterized in that** the VN is in the range from 750 to 1200 cm³/g.

7. Resin composition according to Claim 6, **characterized in that** the VN is in the range from 800 to 1100 cm³/g.

8. Resin composition according to one or more of the preceding claims, **characterized in that** it can be free-foamed.

9. Use of the emulsion polymer according to any of Claims 1 to 8 as processing aid in free-foamable polyvinyl halide resin compositions for producing foams having improved surface quality at low foam density.

10. Use according to Claim 9 in PVC resin compositions.

11. Mouldings composed of free-foamed polyvinyl halide resin compositions according to any of Claims 1 to 8.

## Revendications

1. Compositions moussantes, notamment librement moussantes, de résine d'halogénure de polyvinyle pour mousses à qualité de surface améliorée avec une densité de mousse réduite, contenant
A) 1 à 25 parties en poids, par rapport à 100 parties de l'halogénure de polyvinyle, d'un polymère pouvant être obtenu par polymérisation en émulsion de
(i) 20 à 75 parties en poids de méthacrylate de méthyle,
(ii) 25 à 80 parties en poids d'un ou de plusieurs méthacrylates d'alkyle en C₂-C₁₈ et
(iii) 0 à 5 parties en poids d'un ou de plusieurs monomères vinyliquement mono- ou polyinsaturés copolymérisables avec (i) et/ou (ii),
les composants (i) à (iii) formant ensemble 100 parties en poids, qui sont polymérisés avec jusqu'à 100 parties en poids d'additifs usuels pour la polymérisation en émulsion, le polymère en émulsion étant monophasé et présentant un VZ > 700 cm³/g, et les copolymères qui contiennent
iv) principalement du MMA et
v) un ou plusieurs esters de l'acide acrylique et
vi) du méthacrylate d'éthyle, du méthacrylate de n-butyle ou du méthacrylate de 2-éthylhexyle étant exclus ;
B) 0,1 à 10 parties en poids, par rapport à 100 parties de l'halogénure de polyvinyle, d'un ou de plusieurs agents gonflants ; et
C) 0 à 100 parties en poids, par rapport à 100 parties de l'halogénure de polyvinyle, d'additifs usuels.

2. Compositions de résine selon la revendication 1, **caractérisées en ce que** le composant (ii) est constitué de méthacrylates d'alkyle en C₂-C₄.

3. Compositions de résine selon la revendication 2, **caractérisées en ce que** le composant (ii) est du méthacrylate de n-butyle et/ou du méthacrylate d'iso-butyle.

4. Composition de résine selon la revendication 1 ou 2, **caractérisée en ce que** le composant (ii) est 25 à 40 parties en poids de méthacrylate de n-butyle.

5. Composition de résine selon la revendication 1 ou 2, **caractérisée en ce que** le composant (ii) est 60 à 80 parties en poids de méthacrylate d'iso-butyle.

6. Composition de résine selon une ou plusieurs des revendications précédentes, **caractérisée en ce que** VZ est dans la plage allant de 750 à 1 200 cm³/g.

7. Composition de résine selon la revendication 6, **caractérisée en ce que** VZ est dans la plage allant de 800 à 1 100 cm³/g.

8. Composition de résine selon une ou plusieurs des revendications précédentes, **caractérisée en ce qu'**elle est librement moussante.

9. Utilisation du polymère en émulsion selon les revendications 1 à 8 en tant qu'adjuvant d'usinage dans des compositions librement moussantes de résine d'halogénure de polyvinyle pour la fabrication de mousses à qualité de surface améliorée avec une densité de mousse réduite.

10. Utilisation selon la revendication 9 dans des compositions de résine de PVC.

11. Pièces moulées à partir de compositions librement moussantes de résine d'halogénure de polyvinyle selon les revendications 1 à 8.
